# FASCICULE DE BREVET EUROPEEN

(11) **EP 1 296 628 B1**
(45) Date de publication et mention de la délivrance du brevet: **15.06.2005**
(21) Numéro de dépôt: 01951773.9
(22) Date de dépôt: 05.07.2001
(51) Int. Cl.: A61G 3/06, B60P 1/43

(54) **RAMPE D'ACCES TELESCOPIQUE MOTORISEE POUR LES VEHICULES DE TRANSPORT PUBLIC**
MOTORISIERTE TELESKOPRAMPE FÜR FAHRZEUGE DES ÖFFENTLICHEN PERSONENVERKEHRS
MOTORISED TELESCOPIC ACCESS RAMP FOR PUBLIC TRANSPORT VEHICLES

(30) Priorité: 05.07.2000 FR 0008697
(43) Date de publication de la demande: 02.04.2003
(73) Titulaire: Metalic SA, 69007 Lyon (FR)
(72) Inventeur: SALVAT, Laurent, F-69007 Lyon (FR)
(74) Mandataire: Schmitt, John
(86) Numéro de dépôt international: PCT/FR2001/002145
(87) Numéro de publication internationale: WO 2002/002043

(56) Documents cités:
- EP-A- 0 217 265
- EP-A- 0 931 532
- WO-A-00/20252
- US-A- 4 850 788
- US-A- 5 393 192
- US-A- 6 010 298

## Description

L'invention se rapporte aux dispositifs motorisés télescopiques et escamotables facilitant l'accès aux véhicules de transport public tels que ceux décrits par les brevets US 6 010 298 À et EP 0 931 532 A.

De tels dispositifs équipent certains autobus et consistent à placer, au droit du seuil de la porte d'accès et sous le plancher, un conteneur pourvu d'une rampe, comportant une ouverture, située au droit dudit seuil de la porte d'accès, fermée par un volet dont la charnière est placée au niveau du seuil ; la rampe est constituée par un panneau rigide de forme sensiblement rectangulaire avec une face de roulement à sa partie supérieure et qui est susceptible d'être sortie du conteneur, en soulevant le volet, pour se positionner entre le sol et le seuil de la porte d'accès, afin de.permettre le passage d'une chaise roulante ou d'une poussette ; l'extrémité arrière de la rampe reste reliée au conteneur, tandis que le volet sert de liaison entre l'extrémité arrière de la rampe et le seuil de la porte.

Ces dispositifs ne permettent pas de moduler la pente de la rampe en fonction de la position relative du seuil de la porte et du niveau du sol et ne permettent pas d'atténuer suffisamment le ressaut entre la porte et la rampe.

L'objet de l'invention est de proposer une rampe d'accès aux transports publics qui soit spécifiquement adaptée aux personnes handicapées circulant en fauteuil roulant et. consistant notamment à adoucir la pente et ses variations en supprimant tout ressaut, notamment en l'associant à une rallonge.

Sur les dessins annexés :
La figure 1 représente une vue partielle en élévation éclatée d'une première version du dispositif d'accès selon l'invention, en position rentrée.
Les figures 2A, 2B et 2C représentent une vue partielle de diverses phases de sortie du dispositif d'accès selon la figure 1.
La figure 3 représente une vue partielle en élévation éclatée d'un perfectionnement du dispositif d'accès selon la figure 1 en position rentrée.
La figure 4 représente une vue partielle en élévation éclatée d'un dispositif d'accès selon la figure 3 en cours de sortie.
La figure 5 représente une vue partielle en élévation éclatée d'un perfectionnement du dispositif d'accès selon la figure 3.
La figure 6 représente une vue partielle en élévation de la version préférée d'un moyen de guidage de la rampe d'accès.

L'invention consiste à réaliser une rampe d'accès à la porte d'un autobus, comportant une face supérieure de roulement, susceptible d'être rentrée et sortie d'un boîtier cassette grâce à des moyens de manoeuvre, comportant des moyens d'ajustement permettant en fin de mouvement de sortie d'aligner sa face supérieure de roulement de cette dernière avec le seuil de la porte de l'autobus ; la rampe d'accès est susceptible d'être rallongée grâce à des moyens de prolongement.

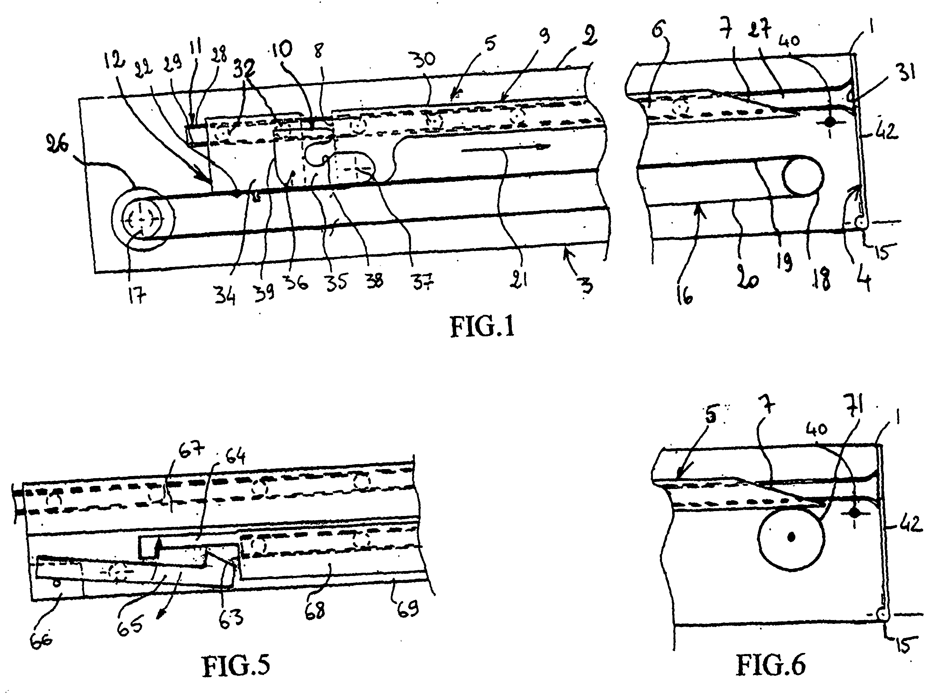

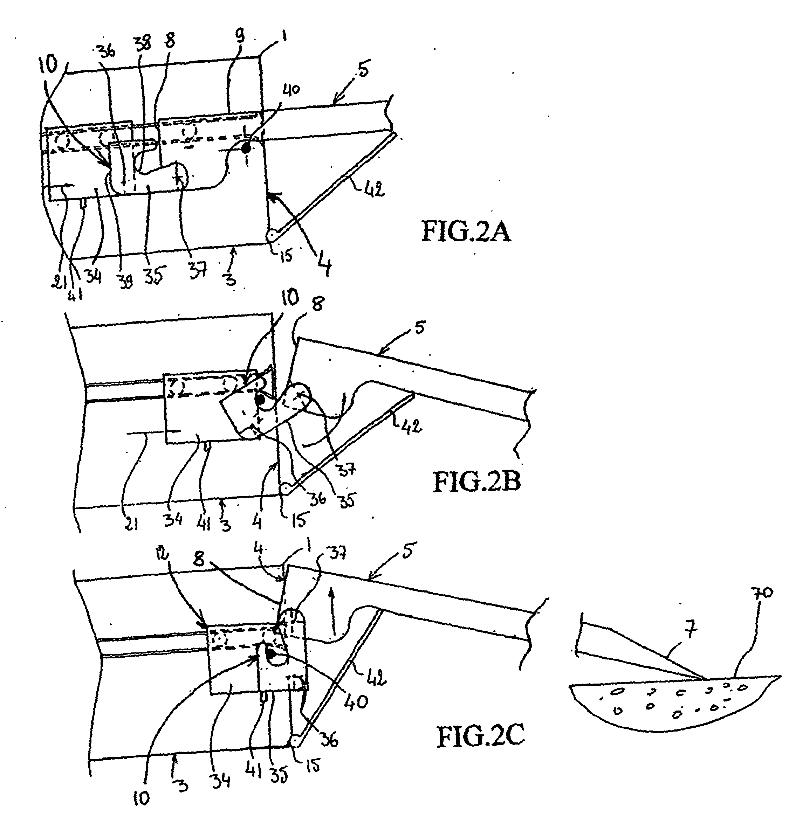

Elle consiste à placer, au droit du seuil 1 (fig.1) de la porte d'accès à un autobus et sous son plancher 2, un boîtier cassette 3 comportant une ouverture de rampe 4, au droit du seuil 1 de la porte d'accès et contenant une rampe d'accès 5, constituée par un panneau rigide 6 de forme sensiblement rectangulaire et suffisamment résistant au poids d'une personne, comprenant une extrémité avant 7 de rampe , une extrémité arrière 8 de rampe et une face de roulement 9 à sa partie supérieure, ladite rampe étant susceptible d'être sortie du boîtier cassette 3 (fig.2A à fig.2C) pour se positionner entre le sol 70 et le seuil 1 de la porte d'accès afin de permettre le passage d'une chaise roulante ou d'une poussette ; la rampe d'accès 5 (fig.1) sort du boîtier cassette 3 (fig.2C) par l'ouverture 4 de rampe et par son extrémité avant 7, ladite rampe 5 venant se poser sur le sol 70, tandis que l'extrémité arrière 8 de rampe, restant reliée au boîtier cassette 3, vient s'ajuster, par des moyens d'ajustement 10, au seuil 1 de la porte d'accès de l'autobus; cette rampe d'accès 5 (fig.1) est susceptible de sortir du boîtier cassette 3, grâce à des moyens de manoeuvre 12 et grâce à des moyens de guidage 11, parallèlement à elle-même et au plancher 2 de l'autobus dans une direction perpendiculaire au seuil 1 de la porte d'accès pour, en fin de mouvement, incliner vers le bas son extrémité avant 7 de rampe venant se poser sur le sol 70, tandis que l'extrémité arrière 8 de rampe, qui était initialement en dessous du seuil 1 (fig.2B) de la porte d'accès, remonte pour venir s'y ajuster (Fig.2C). La rampe d'accès 5 (fig.1) est d'une largeur sensiblement égale à celle de la porte d'accès de l'autobus et supérieure à la largeur d'une chaise roulante pour personnes handicapées et à fortiori à celle d'une poussette pour enfants. Le boîtier cassette 3 est, de préférence, fermé par un volet 42 articulé suivant un bord inférieur 15 du boîtier cassette 3 parallèle au seuil 1 de la porte d'accès et situé dans un plan perpendiculaire au plancher 2 de l'autobus passant par le seuil 1 de la porte d'accès et qui s'escamote lorsque le mouvement de sortie de la rampe d'accès 5 (fig.2A) est en cours.

Le moyen de manoeuvre 12 (fig.1) de la rampe d'accès 5 est constitué d'au moins une courroie crantée 16, ou de tout autre moyen équivalent, tournant en boucle, entre une première roue motrice 17 et une deuxième roue 18 tournant folle sur son axe, comprenant un brin moteur 19 et un brin retour 20 orientés parallèlement à une direction de translation 21 de la rampe d'accès 5 ; le brin moteur 19 est solidaire en un point de liaison 22 d'un coulisseau de manoeuvre 34 se déplaçant par translation, grâce à des moyens de guidage 11 parallèlement à la direction de translation 21 de la rampe d'accès 5 et relié à l'extrémité arrière 8 de rampe par un moyen d'ajustement 10. La première roue motrice 17 est actionnée, par exemple, par un ensemble motoréducteur 26 fonctionnant, par exemple, grâce à un courant électrique continu fourni par le réseau électrique de l'autobus ; lorsque la roue motrice 17 tourne dans un premier sens de rotation la courroie crantée 16 fait sortir la rampe d'accès 5 et lorsque la roue motrice 17 tourne dans un deuxième sens la courroie crantée 16 rentre la rampe d'accès 5 ; le sens de rotation de la roue motrice 17 est défini par le sens du courant électrique circulant dans le motoréducteur 26 ; la mise en mouvement du motoréducteur 26 est commandée, par exemple, par le conducteur de l'autobus et le contrôle de la fin du mouvement de sortie ou de rentrée de rampe se faisant, par exemple, par des contacts de fin de course actionnés par le déplacement du coulisseau de manoeuvre 34 ; dans un perfectionnement de l'invention, on peut avoir un contact de fin de mouvement de sortie de rampe placé à l'extrémité avant 7 de rampe et qui présente l'avantage de bloquer ou d'inverser le mouvement de la rampe d'accès 5 lorsqu'elle rencontre un obstacle.

Dans la version préférée de l'invention, la rampe d'accès 5 repose, par exemple, sur deux rouleaux 71 très écartés (fig.6) ou des patins, tandis que le moyen de guidage 11 (fig.1) du coulisseau de manoeuvre 34 est constitué, par exemple, de deux glissières de guidage 27 parallèles à la direction de translation 21 situées de part et d'autre de la rampe d'accès 5, comportant chacune un guide supérieur 28 et un guide inférieur 29, parallèles entre eux, entre lesquels circule un ou plusieurs galets de guidage 32, ou tout autre dispositif équivalent, dont les axes sont solidaires et disposés de part et d'autre dudit coulisseau 34; ces glissières de guidage 27 sont d'une longueur sensiblement égale à la longueur de la rampe d'accès 5 augmentée de celle du coulisseau de manoeuvre 34 et sont internes au boîtier cassette 3 ; au fur et à mesure du mouvement de sortie de la rampe 5 et lorsque l'arrière 8 de la rampe 5 dépasse les rouleaux 71, son extrémité avant 7 vient au contact du sol, tandis que le moyen 10 ajuste l'arrière 8 de rampe au niveau du seuil 1 (fig. 2C).

Dans une variante de l'invention, les glissières 27 peuvent servir aussi de guidage à plusieurs paires de galets 30 dont les axes sont solidaires de part et d'autre de la rampe d'accès 5 ; au fur et à mesure du mouvement de sortie de la rampe d'accès 5, les galets 30 s'échappent par paires de l'extrémité avant 31 des glissières de guidage 27 et permettent à l'extrémité avant 7 de la rampe 5 de s'abaisser progressivement jusqu'à son appui sur le sol 70, tandis que l'extrémité arrière 8 de rampe se relève grâce au moyen d'ajustement 10.

Dans la version préférée de l'invention, un moyen d'ajustement 10, situé entre le coulisseau de manoeuvre 34 (fig.1 et fig.2A) et la rampe d'accès 5, est réalisé par deux biellettes 35 constituant une articulation de liaison ; les biellettes 35 sont articulées d'une part sur le coulisseau de manoeuvre 34 suivant un premier axe de rotation 36 perpendiculaire à la direction de translation 21 de la rampe d'accès 5 et parallèle au seuil 1 de la porte d'accès et, d'autre part, sur l'extrémité arrière 8 de rampe suivant un deuxième axe de rotation 37 parallèle au premier axe de rotation 36 ; lors de la translation de la rampe d'accès 5 les premier et deuxième axes de rotation 36 et 37 sont dans un plan parallèle à la face de roulement 9 de la rampe d'accès 5 ; ces deux biellettes 35, situées de part et d'autre de la rampe d'accès 5, comportent chacune une came 38 et une butée 39, situées sur la partie supérieure de la biellette 35 correspondante ; vers la fin du mouvement de sortie de rampe, au moment ou l'arrière 8 de la rampe 51 échappe aux rouleaux 71 ou que la dernière paire de galets 30 quittent les glissières 27, les cames 38 viennent en contact avec des galets de levage. 40 (fig.2B), ou un dispositif équivalent, dont l'axe de rotation est fixe et solidaire du boîtier cassette 3 et qui provoque le soulèvement du deuxième axe de rotation 37 jusqu'à obtenir un pivotement de 90° environ des biellettes 35 (fig.2C) dont les butées 39 viennent en appui sur des retenues 41, soit solidaires du coulisseau de manoeuvre, soit solidaires du boîtier cassette 3 ; le profil des cames 38 et des butées 39 est choisi pour qu'en fin de mouvement l'extrémité arrière 8 de rampe soit en face et au même niveau du seuil 1. Dans ces conditions, le volet 42 est de préférence articulé sur le bord inférieur 15 de l'ouverture de rampe 4 et maintenu en position de fermeture lorsque la rampe d'accès 5 est à l'intérieur du boîtier cassette 3 grâce à plusieurs ressorts ; lors du mouvement, le volet 42 s'escamote sous la poussée de la rampe d'accès 5 et se relève sous l'action des ressorts en fin de mouvement de rentrée de rampe.

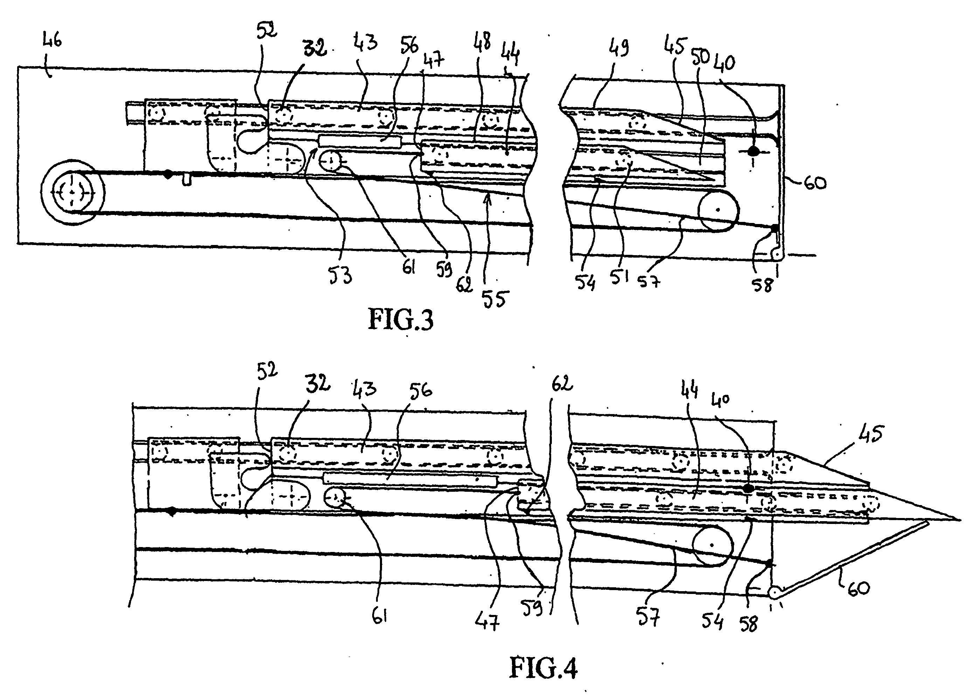

Dans un perfectionnement de l'invention, on associe à la rampe d'accès 43 (fig.3) une rallonge de rampe 44, venant prolonger la rampe d'accès 43 par son extrémité avant 45 de rampe, permettant de diminuer l'angle de la pente et qui se loge sous la rampe d'accès 43 formant boîtier pour la rallonge de rampe 44, comportant une extrémité arrière 47 et qui est constituée d'un panneau rigide ayant sensiblement la forme de celui de la rampe d'accès 43 avec une seconde face de roulement 48 à sa partie supérieure, sensiblement parallèle à la première face de roulement 49 et coulissant directement sous la rampe d'accès 43 de manière que la face de roulement 48 de la rallonge 44 soit le plus près possible de la rampe d'accès 43 ; la longueur de la rallonge de rampe 44 est sensiblement inférieure à celle de la rampe d'accès 43 de manière à pouvoir loger, dans la zone de l'extrémité arrière 52 de rampe , les moyens de manoeuvre 53 de la rallonge de rampe 44 tout en restant entièrement située sous la rampe d'accès 43 en position rentrée ; le mouvement relatif de sortie de rallonge est, de préférence, limité aux trois quarts environ de la longueur de la rallonge de rampe 44, par une butée de rallonge 54, qui peut être solidaire de la rampe ou des moyens de manoeuvre, de manière à en garder environ un quart de la longueur pour faire office d'emmanchement rigide afin que la rallonge de rampe 44 reste dans le prolongement de la rampe d'accès 43 lorsqu'elle est sortie et supporte une charge.

La rallonge de rampe 44 est, dans la version préférée de l'invention, commandée par le déplacement de la rampe d'accès 43 grâce, d'une part à un dispositif de retenue 55 et. d'autre part, à un dispositif de poussée 56 ; le dispositif de retenue 55 est, par exemple, constitué d'une sangle de retenue 57 ou, en variante, d'un câble présentant une première et une seconde extrémité 58 et 59, dont la première extrémité 58 est solidaire du boîtier cassette 46 au voisinage du volet 60, la sangle de retenue 57 passant ensuite sur une poulie de renvoi 61 dont l'axe est fixe par rapport à la rampe d'accès 43 et situé au voisinage de l'extrémité arrière 52 de rampe, la sangle de retenue 57 étant ensuite fixée par sa seconde extrémité 59 à l'extrémité arrière 47 de rallonge ; le dispositif de poussée 56 est constitué, par exemple, d'un ressort qui est comprimé, ou par un vérin pneumatique dont le compartiment, qui permet de sortir la tige de vérin du corps, est sous pression permanente ou tout autre dispositif équivalent ; le dispositif de poussée 56 prend appui directement ou indirectement, d'une part sur la rampe d'accès 43, au voisinage de l'extrémité arrière 52 de rampe et, d'autre part, sur l'extrémité arrière 47 de rallonge 44 ; l'appui du dispositif de poussée 56 est indirect lorsque, pour limiter l'amplitude de son débattement, on le fait agir par l'intermédiaire de leviers amplifiant le mouvement ; lorsque la rampe d'accès 43 est à l'intérieur du boîtier cassette 46, le moyen de retenue 57 est tendu empêchant le dispositif de poussée 56 de se détendre ; dès que le mouvement de sortie de rampe s'amorce, la poulie de renvoi 61 se rapproche de la première extrémité 58 d'une distance qui permet à la seconde extrémité 59 de s'éloigner d'une distance égale de l'extrémité arrière 52 de rampe, sous l'action du dispositif de poussée 56 et cela permet à la rallonge de rampe 44 d'amorcer un mouvement relatif de sortie de rallonge, de sous la rampe d'accès 43, par l'extrémité avant 45 de rampe ; le mouvement relatif de sortie de rallonge se poursuit en même temps que le mouvement de sortie de rampe jusqu'à ce qu'une retenue 62 solidaire de la rallonge de rampe 44 vienne en appui sur la butée de rallonge 54, bloquant ainsi le mouvement relatif de sortie; le mouvement de sortie de rampe continue alors comme précédemment décrit dans les diverses versions présentées, tandis que le moyen de retenue 57 continue de se détendre. Lorsque le mouvement de rentrée de rampe est enclenché la rallonge de rampe 44 reste en position sortie tant que le moyen de retenue 57 n'est pas tendu ; dès que le moyen de retenue 57 se tend, au cours du mouvement de rentrée de rampe, la poulie de renvoi 61 en s'éloignant de la première extrémité 58, amorce le mouvement relatif de rentrée de rallonge qui se poursuit jusqu'à la fin du mouvement de rentrée de rampe.

Dans une variante de l'invention, le guidage de la rallonge 44 peut être réalisé par des paires de galets 51 guidés dans des glissières 50 solidaires des parois latérales de la rampe d'accès 43 formant boîtier.

Dans une variante de l'invention, l'extrémité arrière 63 de rallonge (fig.5) comporte une retenue 64 dans laquelle un crochet de retenue 65, commandé par un dispositif électromécanique 66, fixe par rapport à la rampe d'accès 67, est susceptible de s'engager; lorsque le crochet de retenue 65 est engagé, la rallonge de rampe 68 reste partiellement dans son logement 69 situé sous la rampe d'accès 67 ; la commande de blocage de la rallonge de rampe 68 peut se situer au niveau du poste de conduite de l'autobus.

## Revendications

1. Rampe d'accès (5.43) à un autobus, depuis le niveau du sol (70) jusqu'au plancher (2) du véhicule en passant par le seuil (1) d'une porte d'accès , constituée par un panneau rigide de forme sensiblement rectangulaire, comprenant une extrémité avant (7,45) et une extrémité arrière (8,52) et une première face de roulement (9) à sa partie supérieure, ladite rampe étant contenue dans un boîtier cassette (3,46) placé sous le plancher (2) de l'autobus et comportant une ouverture (4) située au droit du seuil (1) et fermée par, un volet (42,60)autorisant la sortie ou la rentrée de la rampe dont l'extrémité arrière (8,52), restant reliée au boîtier cassette (3,46), vient s'ajuster par au moins une biellette (10,35) au seuil (1) de la porte d'accès en fin de mouvement de sortie de rampe, laquelle est entraînée par au moins une courroie crantée (12,16,53) tournant en boucle et guidée par des galets (30), patins (32), rouleaux (71) et des glissières (27), le mouvement de sortie de la rampe ayant lieu par son extrémité avant (7,45) venant se poser sur le sol (70), **caractérisée en ce que** la rampe d'accès (43) est associée à une rallonge (44) constituée d'un panneau rigide avec une face de roulement (48) et une extrémité arrière (47), se logeant et coulissant sous ladite rampe (43) d'accès dont le déplacement en commande la manoeuvre au moyen d'une sangle de retenue (55,57) et d'un ressort de poussée (56) pour amener ladite rallonge dans le prolongement de la face avant (45) de la rampe (43).

2. Rampe d'accès suivant la revendication 1, **caractérisée en ce que** la sangle (57) de retenue de la rallonge (44) comporte une première extrémité (58) solidaire du boîtier cassette (46) au voisinage du volet (60) et une seconde extrémité (59) fixée à l'extrémité arrière (47) de ladite rallonge (44) en passant sur une poulie de renvoi (61) dont l'axe est fixe par rapport à la rampe d'accès (43), tandis que le dispositif de poussée (56) prend appui directement d'une part sur la rampe d'accès (43) au voisinage de son extrémité arrière (52) et, d'autre part, à l'extrémité arrière (47) de la rallonge (44).

3. Rampe d'accès suivant la revendication 1, **caractérisée en ce que** la biellette (35), constituant une articulation de liaison d'une part sur un coulisseau de manoeuvre (34) suivant un premier axe de rotation (36) et, d'autre part, sur l'extrémité arrière (8,52) de la rampe (43) suivant un deuxième axe de rotation (37), comporte une came (38) et une butée (39), la came (38) venant en contact avec un galet de levage (40) dont l'axe de rotation est fixe et solidaire du boîtier cassette (3,46) et qui, en fin de mouvement de sortie de la rampe, provoque le soulèvement du deuxième axe de rotation (37) jusqu'à obtenir un pivotement de 90° de la biellette (35) dont la butée (39) vient en appui sur une retenue (41) solidaire du coulisseau de manoeuvre (34) ou solidaire du boîtier cassette (3.4).

4. Rampe d'accès suivant la revendication 1, **caractérisée en ce qu'**un dispositif de blocage permet, sur demande, de limiter la sortie de la rallonge-de rampe.

## Patentansprüche

1. Durch eine steife Platte in deutlich rechteckiger Form gebildete Zugangsrampe (5, 43) zu einem Autobus ab der Höhe des Erdbodens (70) bis zum Fußboden (2) des Fahrzeugs mit Übergang über die Schwelle (1) einer Zugangstür, mit einem vorderen Ende (7, 45) und einem hinteren Ende (8, 52) und einer ersten Rollseite (9) an ihrem oberen Teil, wobei die genannte Rampe in einem unter dem Fußboden (2) des Autobusses platzierten Kassettengehäuse (3, 46) enthalten ist und eine sich gegenüber der Schwelle (1) befindende und durch eine das Ausfahren oder das Einfahren der Rampe, deren hinteres Ende (8, 52) mit dem Kassettengehäuse (3, 46) verbunden bleibt, erlaubende Klappe (42, 60) verschlossene Öffnung (4) umfasst, wobei das hinter Ende sich durch wenigstens einen Schwingarm (10, 35) an der Schwelle (1) der Zugangstür am Ende der Ausgangsbewegung der Rampe anpasst, die durch wenigstens einen sich in einer Schleife drehenden und durch Walzen (30), Kufen (32), Rollen (71) und Gleitschienen (27) geführten gezahnten Treibriemen (12, 16, 53) angetrieben wird, wobei die Ausgangsbewegung der Rampe durch ihr auf dem Erdboden (70) zum Aufliegen kommendes vorderes Ende (7, 45) erfolgt, **dadurch gekennzeichnet, dass** die Zugangsrampe (43) einer aus einer steifen Platte mit einer Rollseite (48) und einem hinteren Ende (47) gebildeten Verlängerung (44) zugeordnet ist, die unter der genannten Zugangsrampe (43), deren Verschiebung die Betätigung mittels eines Halteriemens (55, 57) und einer Schubfeder (56) steuert, um die genannte Verlängerung in die Verlängerung der vorderen Seite (45) der Rampe (43) zu verbringen, untergebracht ist und darunter gleitet.

2. Zugangsrampe gemäß Anspruch 1, **dadurch gekennzeichnet, dass** der Halteriemen (57) der Verlängerung (44) ein mit dem Kassettengehäuse (46) fest befestigtes erstes Ende (58) in der Nähe der Klappe (60) und ein zweites, am hinteren Ende (47) der genannten Verlängerung (44) befestigtes Ende (59) mit einem Durchgang auf einer Umlenktrommel (61) umfasst, deren Achse im Verhältnis zur Zugangsrampe (43) befestigt ist, während die Schubvorrichtung (56) sich direkt einerseits auf der Zugangsrampe (43) in der Nähe ihres hinteren Endes (52) aufstützt und andererseits am hinteren Ende (47) der Verlängerung (44).

3. Zugangsrampe gemäß Anspruch 1, **dadurch gekennzeichnet, dass** der ein Verbindungsgelenk einerseits auf einem Bedienschlitten (34) gemäß einer ersten Rotationsachse (36) und andererseits auf dem hinteren Ende (8, 52) der Rampe (43) gemäß einer zweiten Rotationsachse (37) bildende Schwingarm (35) eine Nocke (38) und einen Anschlag (39) umfasst, wobei die Nocke (38) in Kontakt mit einer Hebewalze (40) kommt, deren Rotationsachse an dem Kassettengehäuse (3, 46) befestigt und mit ihm fest verbunden ist und die bei Abschluss der Ausgangsbewegung der Rampe das Anheben der zweiten Rotationsachse (37) hervorruft, bis ein Schwenken des Schwingarms (35) um 90° erreicht wird, dessen Anschlag (39) sich auf einem fest mit dem Bedienschlitten (34) oder dem Kassettengehäuse (3, 4) verbunden Stopper (41) aufstützt.

4. Zugangsrampe gemäß Anspruch 1, **dadurch gekennzeichnet, dass** eine Blockiervorrichtung auf Wunsch die Begrenzung des Ausfahrens der Rampenverlängerung erlaubt.

## Claims

1. An access ramp (5,43) to a bus, from ground level (70) to the floor (2) of the vehicle, crossing the threshold (1) of an entrance door, composed of a rigid panel of more or less rectangular shape, including a front end (7,45) and a rear end (8,52) and a first running surface (9) in its upper part, the said ramp being contained in a cassette housing (3,46) placed underneath the floor (2) of the bus, and including an opening (4) located opposite to the threshold (1) and closed off by a shutter (42,60) which allows the withdrawal or reinsertion of the ramp, whose rear end (8,52) remains connected to the cassette housing (3,46), capable of being adjusted by means of at least one connecting rod (10,35) to the threshold (1) of the entrance door at the end of the ramp withdrawal movement, the latter being driven by at least one toothed belt (12,16,53) running in a loop and guided on pulley wheels (30), runners (32), rollers (71) and sliders (27), where the withdrawal movement of the ramp takes place via its front end (7,45) to be placed on the ground (43) and is associated with an extension (44) composed of a rigid panel with a running surface (48) and a rear end (47), lodging and sliding under the said access ramp (43), the movement of which controls its motion by means of a retaining strap (55,57) and a drive spring (56), to position the said extension as a prolongation of the front surface (45) of the ramp (43).

2. An access ramp in accordance with claim 1, **characterised in that** the retaining strap (57) of the extension (44) includes a first end (58) which is solidly attached to the cassette housing (46) in the vicinity of the shutter (60), and a second end (59) secured to the rear end (47) of the said extension (44), passing over a return pulley (61) whose axis is fixed in relation to the access ramp (43), while the drive device (56) bears firstly directly onto the access ramp (43) in the vicinity of its rear end (52), and secondly at the rear end (47) of the extension (44).

3. An access ramp in accordance with claim 1, **characterised in that** the connecting rod (35), constituting a linking articulation firstly to a manoeuvring slide (34) on a first axis of rotation (36), and secondly on the rear end (8,52) of the ramp (43) on a second axis of rotation (37), includes a cam (38) and an end-stop (39), the cam (38) making contact with a lifting pulley wheel (40) whose axis of rotation is fixed and solidly attached to the cassette housing (3,46), and which, at the end of the withdrawal movement of the ramp, causes the second axis of rotation (37) to lift until a 90° pivoting of the connecting rod (35) is achieved, the end-stop (39) of which bears upon a stop element (41) solidly attached to the manoeuvring slide (34) or solidly attached to the cassette housing (3,4).

4. An access ramp in accordance with claim 1, **characterised in that** a stop device can be provided, where required, to limit the withdrawal of the ramp extension.
